# EUROPEAN PATENT SPECIFICATION

(11) **EP 2 119 338 B1**
(45) Date of publication and mention of the grant of the patent: **07.03.2012**
(21) Application number: 09158899.6
(22) Date of filing: 28.04.2009
(51) Int. Cl.: A01D 41/12, A01D 41/127

(54) **System for broadcast spreading of a material in wind conditions**
System zur streuenden Verbreitung von Material unter windigen Bedingungen
Système pour la diffusion d'un matériau dans des conditions de vent

(30) Priority: 15.05.2008 US 121204
(43) Date of publication of application: 18.11.2009
(73) Proprietor: Deere & Company, Moline, IL 61265 (US)
(72) Inventor: Chervenka, Kirk, Jacob, Bettendorf, IA 52722 (US); Pearson, Mark Leonard, Leclaire, IA 52753 (US)
(74) Representative: Holst, Sönke

(56) References cited:
- EP-A1- 0 685 151
- EP-A1- 1 163 834
- EP-A1- 1 570 726
- EP-A1- 1 985 170
- EP-A2- 0 537 621
- WO-A1-03/005803
- DE-A1- 19 705 843

## Description

The present invention relates to a work machine, and more particularly, to a system for broadcast spreading of a material, such as chaff, in wind conditions.

Work machines, such as combines, are employed in the agricultural industry for harvesting crops. Typical such work machines move through a crop field during harvesting operations while operating a header at the front of the work machine to cut the crop. Once cut, the grain is removed from the crop materials by threshing and separating assemblies on the work machine, and then transferred to the work machine's hopper for temporary storage. Such work machines may also employ a spreader that receives the chaff exiting the threshing and separating assemblies, and discharges the chaff from the work machine. For example, with some crops, e.g., corn, a spreader may be employed, whereas with other crops, e.g., wheat, a spreader may not be employed.

During harvesting operations, it is desirable to discharge the chaff uniformly across the field by distributing the chaff along the width of the swath cut by the work machine's header. Thus, as each swath of crop is cut, the grain is removed and stored in the hopper, and the chaff is processed and then distributed back onto the swath from which the crop was cut, behind the combine. By distributing the chaff in this manner, the chaff is evenly distributed throughout the field. Also, it is desirable to avoid spreading the chaff onto portions of the crop that have not been harvested yet, e.g., the next swath to be harvested that is adjacent to the current swath being harvested. For example, spreading chaff onto portions of the crop that have not yet been harvested may interfere with and reduce the efficiency of the header, threshing and separating assemblies, potentially resulting in a reduced yield of grain. However, the presence of wind may disrupt the flow of chaff exiting the spreader, causing the chaff to be discharged onto parts of the field that have not been harvested yet and/or leaving portions of the field that were harvested devoid of chaff.

In the prior art, the combine is equipped with an anemometer for sensing the wind speed and a wind angle sensor for sensing the angle of the wind with respect to the combine. The sensor values are used for calculating the side wind speed which is used to control the speed of rotating straw spreaders in order to cover an area behind the combine that corresponds to the cutting width of its header (EP 1 985 170 A1 published after the priority date of this application) or the lateral angle of spreader plates is controlled based upon these sensor outputs, (EP 1 163 834 A1 and WO 03/005803 A1), or only the lateral wind speed is sensed and the position of spreader plates (EP 0 537 621 A1) or the speed of rotating straw spreaders (EP 1 570 726 A1) is controlled accordingly.

Accordingly, there is a need in the art for a work machine and system for improved broadcast spreading of material, such as chaff, in wind conditions.

This object is achieved with the subject matter of claim 1. The dependent claims recite advantageous embodiments.

A system for broadcast spreading of a material from a work machine in wind conditions includes a spreader configured for broadcast spreading of the material; an input device configured to provide wind condition data including a wind direction and a wind speed; an orientation control device configured to determine an orientation of the work machine, the orientation describing the compass direction in which the machine is moving; and a controller coupled to the spreader, the input device and the orientation control device. The controller is configured to execute program instructions to control the broadcast of said material from said work machine based on a crosswind component that is determined in conjunction with said orientation of said work machine and the wind condition data.

An embodiment of the invention is shown in the drawings, in which:
FIG. 1 depicts an agricultural work machine having a system for broadcasting a material, such as chaff, in accordance with an embodiment of the present invention.
FIG. 2 schematically depicts a system for broadcasting the chaff from the work machine of FIG. 1.
FIG. 3 depicts the agricultural work machine of FIG. 1 while performing harvesting operations and broadcasting chaff into the field being harvested.

Referring now to FIG. 1, there is schematically shown a work machine 10 in accordance with an embodiment of the present invention. In the present embodiment, work machine 10 is an agricultural machine in the form of a self-powered combine, although it will be understood that the present invention is applicable to other types of work machines in agricultural or non-agricultural industries, self-powered or otherwise.

Work machine 10 may include a header 12, a hopper 14, and a system 16 configured for broadcast spreading of material from work machine 10, such as chaff, e.g., material other than grain (MOG) extracted during crop harvesting operations. Work machine 10 also includes an orientation control device 18 configured to determine the orientation of work machine 10. Orientation control device 18 is configured to determine the yaw orientation, i.e., the compass direction that describes the direction in which work machine 10 is facing, e.g., when moving about during harvesting operations.

For example, orientation control device 18 may be in the form of a vehicle tracking system. In the present embodiment, orientation control device 18 is in the form of a global positioning system (GPS) receiver 18 that is used by the operator of work machine 10 to enhance the efficiency of farming operations. GPS receiver 18 may also be configured to determine the speed of work machine 10, e.g., during harvesting operations, as well as the orientation of work machine 10 in the pitch and roll directions. However, it will be understood that other orientation control devices may be employed without departing from the scope of the present invention, e.g., satellite imagery-based devices, and/or gyro and/or accelerometer-based devices, and/or other wireless systems capable of providing work machine 10 orientation information. In any event, in the present embodiment, work machine 10 is configured to harvest a crop, and to uniformly distribute the chaff across the field being harvested using the orientation information obtained from GPS receiver 18.

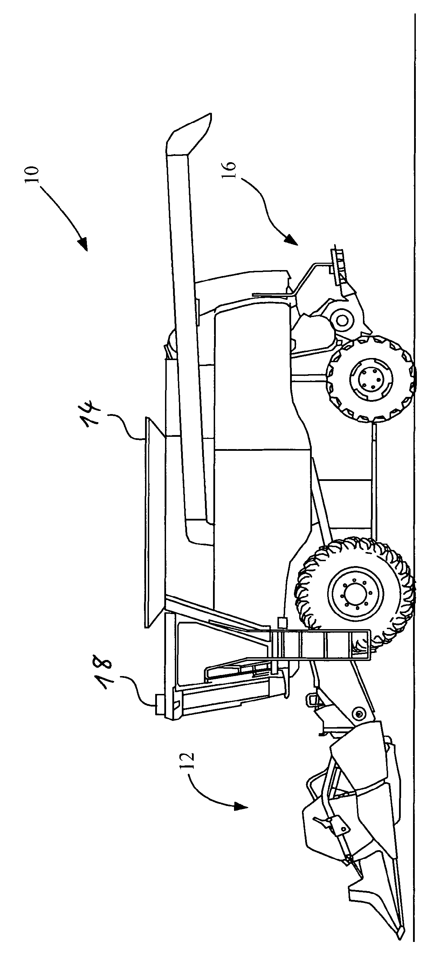

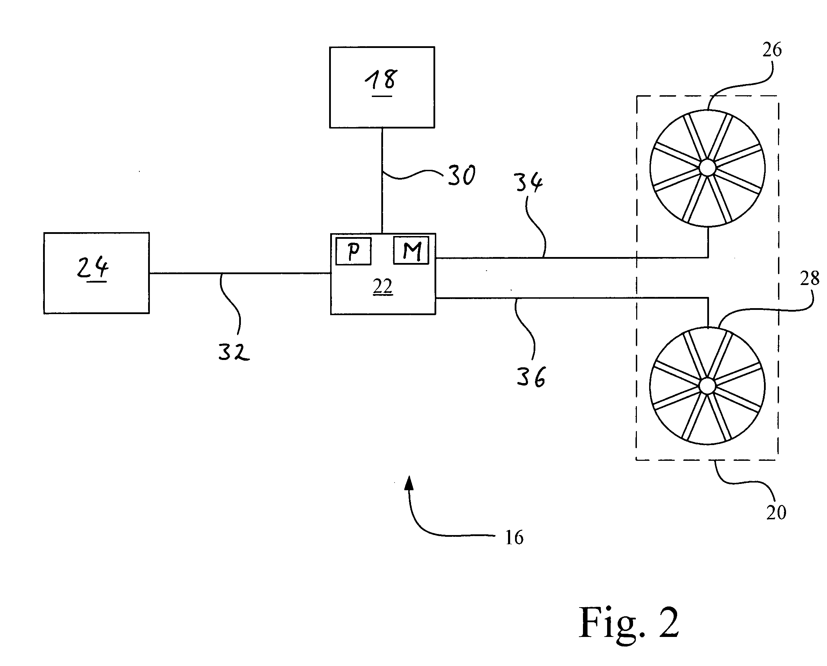

Referring now to FIG. 2, system 16 for broadcast spreading of the chaff from work machine 10 is schematically depicted. System 16 includes a broadcast spreader 20, a controller 22, an input device 24, and includes the use of GPS receiver 18. Broadcast spreader 20 includes an impeller 26 and an impeller 28, and is configured to broadcast the chaff behind work machine 10 during harvesting operations. As used herein, the term, "impeller," includes the use of flails.

Controller 22 is communicatively coupled to GPS receiver 18 via a communications link 30, communicatively coupled to input device 24 via a communications link 32, and communicatively coupled to spreader 20, in particular, impeller 26 and impeller 28, via respective communications links 34 and 36. In the present embodiment, communications links 30, 32, 34 and 36 are digital wired connections, such as control area network (CAN) links, although in other embodiments, communications links 30, 32, 34 and 36 may be any convenient link capable of transmitting control signals, such as analog and/or digital wired and/or wireless links.

Controller 22 includes a processor P and a memory M storing, among other things, program instructions executable by processor P for controlling the broadcast of chaff from work machine 10.

Impellers 26 and 28 may be independently controlled counter-rotating variable speed impellers, which may be controlled by controller 22, during broadcast spreading operations, based on inputs received at controller 22 from GPS receiver 18 and input device 24. Each of impellers 26 and 28 include eight downwardly extending impeller blades 38, although other numbers and orientations of blades may be employed without departing from the scope of the present invention. Each of impellers 26 and 28 may be driven by a hydraulic motor (not shown) to rotate about an axis that is substantially vertical, but which may be tilted somewhat in order to enhance broadcast performance. In other embodiments, electric motors and/or other motive devices and/or transmissions may be used to operate impellers 26 and 28. In the present embodiment, impeller 26 rotates in counterclockwise direction 40, when viewed from above, and impeller 28 rotates in clockwise direction 42. In any case, impellers 26 and 28 are configured to receive chaff 106 from work machine 10 and to distribute the chaff 106 behind work machine 10 as it traverses field 100 during harvesting operations.

Input device 24 is configured to provide input to controller 22, including wind condition data, such as wind speed and wind direction. In the present embodiment, input device 24 is in the form of a keyboard configured to receive wind condition data as input by the operator of work machine 10, and to provide the wind condition data to controller 22.

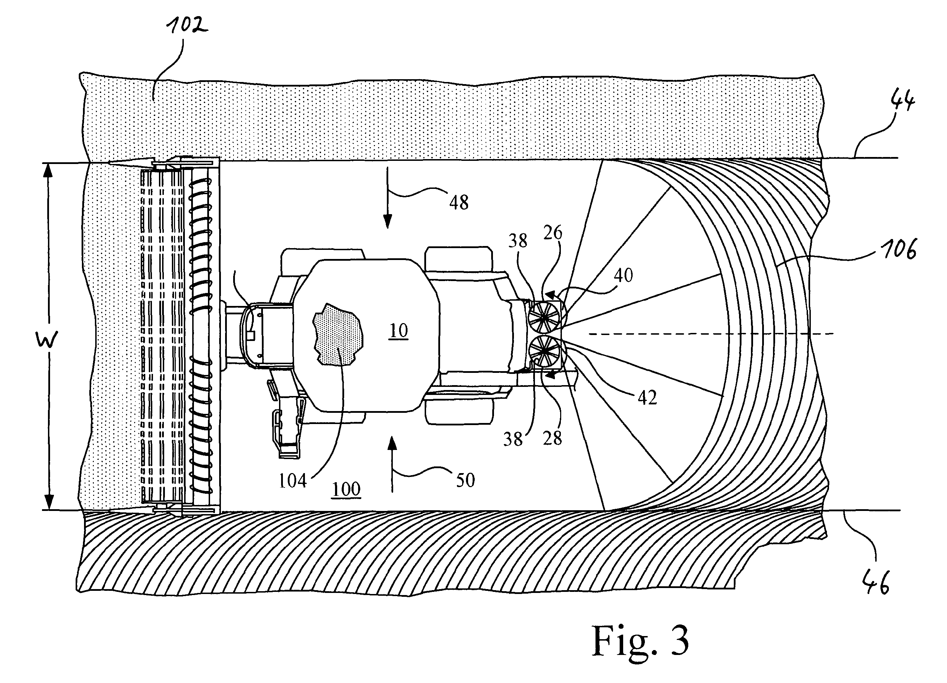

Referring now to FIG. 3, work machine 10 is depicted in the midst of a harvesting operation in a crop field 100, wherein work machine 10 is harvesting a swath of crop 102. During harvesting operations, work machine 10 is driven by an operator through crop field 100, wherein crop 102 is cut from field 100 by header 12. After crop 102 is cut, work machine 10 separates the grain 104 from the chaff 106 (MOG), e.g., via threshing and separating assemblies (not shown) and stores the grain 104 in hopper 14 until a convenient time to offload and transfer grain 104 to a transport vehicle and/or storage facility, e.g., a silo. During the harvesting operations, chaff is distributed across field 100 using broadcast spreader 20 at the same time that new crop 102 is being harvested. It will be understood that chaff 106 may be further processed or chopped prior to being broadcast to field 100 by spreader 20.

In the present embodiment, spreader 20 is located on the aft end of work machine 10. However, it will be understood that other spreader locations may be employed without departing from the scope of the present invention. In any event, spreader 20 broadcasts chaff 106 via impellers 26 and 28 behind work machine 10 into the current swath being cut in crop 102 by header 12, to thereby uniformly distribute chaff 106 across field 100.

System 16 is set up such that, during harvesting operations in windless conditions, impellers 26 and 28 will broadcast chaff 106 to lateral broadcast boundaries 44 and 46, respectively, that preferably correspond to the width W of the swath cut in crop 102 by header 12. Impeller speeds are increased in order to extend the lateral broadcast boundaries further away from work machine 10, and are decreased in order to retract the lateral broadcast boundaries toward work machine 10. The speed of impellers 26 and 28 may be initially set by the operator of work machine 10 based on crop conditions, e.g., crop type, moisture content, etc., so as to establish lateral broadcast boundaries 44 and 46 at the desired location. However, the presence of wind having a crosswind component (a wind velocity component in a direction perpendicular to the direction in which work machine 10 is facing/moving) will shift the lateral broadcast boundaries 44 and 46 in the direction of the crosswind component, causing chaff 106 to be broadcast into undesirable locations, such as into the crop 102 in the next swath to be harvested or on top of the chaff from the previously harvested swath, and may leave portions of the current swath barren of chaff 106.

For example, a crosswind component in direction 48 would shift lateral broadcast boundary 44 in direction 48 toward work machine 10, leaving a strip at the edge of the swath barren of chaff 106, while at the same time shifting lateral broadcast boundary 46 away from work machine 10 in direction 48, causing an overlap of chaff 106 with the previously harvested swath.

On the other hand, a crosswind component in direction 50 would shift lateral broadcast boundary 44 in direction 50 away from work machine 10 and into crop 102 of the next swath to be harvested, thus increasing the load on work machine 10 and reducing the efficiency of the harvesting operations in that swath, while at the same time shifting lateral broadcast boundary 46 toward work machine 10 in direction 48, leaving a strip at the edge of the current swath barren of chaff 106.

Accordingly, in an aspect of the present invention, controller 22 is configured to execute program instructions to control the broadcast of chaff 106 from work machine 10 based on wind condition data, e.g., received via input device 24, and based on the orientation of work machine 10 as determined by GPS receiver 18. The wind condition data may include wind speed data and wind direction data, e.g., obtained by the operator of work machine via weather forecast information or other sources of wind condition data, who enters the data into input device 24 for use by controller 22. In the present embodiment, the wind condition data is stored in memory M of controller 22 after being entered by the operator.

In particular, controller 22 is configured to execute the program instructions to determine a crosswind component based on the wind condition data and based on the orientation of work machine 10 as determined by GPS receiver 18, and to control lateral broadcast boundary 44 and lateral broadcast boundary 46 based on the crosswind component, including independently controlling the rotational speed of impeller 26 and the rotational speed of impeller 28 in order to maintain lateral broadcast boundary 44 and lateral broadcast boundary 46, based on the crosswind component. The crosswind component may be readily determined by controller 22 based on wind speed and wind direction in conjunction with the orientation of work machine 10, for example, by performing a vector analysis using algebraic and trigonometric calculations. In other embodiments, lookup tables storing crosswind component values for corresponding wind speeds and directions, and machine orientations may be employed. Controller 22 may increase the rotational speed of one of impellers 26 and 28, and simultaneously decrease the speed of the other of impellers 26 and 28, in order to maintain lateral broadcast boundary 44 and lateral broadcast boundary 46.

For example, for a crosswind component in direction 48, controller 22 would increase the rotational speed of impeller 26 to maintain lateral broadcast boundary 44 in order to compensate for the shift in direction 48 that would otherwise be caused by the crosswind component, and would simultaneously decrease the rotational speed of impeller 28 to maintain lateral broadcast boundary 46 in order to compensate for the shift in direction 48 that would otherwise be caused by the crosswind component.

Conversely, for a crosswind component in direction 50, controller 22 would decrease the rotational speed of impeller 26 to maintain lateral broadcast boundary 44 in order to compensate for the shift in direction 50 that would otherwise be caused by the crosswind component, and would simultaneously increase the rotational speed of impeller 28 to maintain lateral broadcast boundary 46 in order to compensate for the shift in direction 50 that would otherwise be caused by the crosswind component.

Accordingly, in view of the above, with the present invention an operator may be able to harvest in any direction, in any pattern, without the necessity of manually readjusting the speeds of impellers 26 and 28 in order to compensate for wind. In addition, because many work machines already include a GPS receiver, the present invention may provide such machines with an inexpensive system for broadcast spreading of a material from a work machine in wind conditions.

## Claims

1. A system (16) for broadcast spreading of a material from a work machine (10) in wind conditions, comprising:
a spreader (20) configured for broadcast spreading of said material;
an input device (24) configured to provide wind condition data, said wind condition data including a wind direction and a wind speed;
a controller (22) coupled to said spreader and said input device, said controller being configured to execute program instructions to control the broadcast of said material from said work machine (10) based on said wind condition data from said input device (24),
**characterized in that** the system (16) comprises an orientation control device (18) configured to determine an orientation of said work machine (10), the orientation describing the compass direction in which the machine (10) is moving,
and that the controller (22) is coupled to the orientation control device (16) and configured to execute program instructions to control the broadcast of said material from said work machine (10) based on a crosswind component that is determined in conjunction with said orientation of said work machine (10) and the wind condition data.

2. The system (16) of claim 1, wherein said input device (24) is configured to receive said wind condition data as entered by an operator of said work machine (10).

3. The system (16) of claim 1, said controller being further configured to control a first lateral broadcast boundary and a second lateral broadcast boundary based on said crosswind component.

4. The system (16) of claim 3, said spreader including a first impeller (26) and a second impeller (28), wherein each of said first impeller (26) and said second impeller (28) are independently controlled variable speed impellers, said spreader (20) being configured to broadcast said material from said work machine (10) using said first impeller (26) and said second impeller (28),
wherein said controller (22) is configured to independently control the rotational speed of said first impeller (26) and the rotational speed of said second impeller (28) in order to maintain said first lateral broadcast boundary and said second lateral broadcast boundary based on said crosswind component.

5. The system (16) of claim 4, wherein said controller (22) is configured to increase the rotational speed of one of said first impeller (26) and said second impeller (28), and to simultaneously decrease the speed of the other of said first impeller (26) and said second impeller (28), in order to maintain said first lateral broadcast boundary and said second lateral broadcast boundary.

6. The system (16) of claim 1, wherein said orientation control device is a global positioning system (GPS) receiver.

7. A work machine (10), in particular a combine, comprising a system (16) according to any of the preceding claims.

## Patentansprüche

1. System (16) zur streuenden Verbreitung eines Materials von einer Arbeitsmaschine (10) unter windigen Bedingungen, das Folgendes umfasst:
eine Streuvorrichtung (20), die für das streuende Verbreiten des Materials konfiguriert ist;
eine Eingabevorrichtung (24), die konfiguriert ist, um Windbedingungsdaten zu liefern, wobei die Windbedingungsdaten eine Windrichtung und eine Windgeschwindigkeit umfassen;
einen Controller (22), der mit der Streuvorrichtung und der Eingabevorrichtung gekoppelt ist, wobei der Controller konfiguriert ist, um Programmanweisungen auszuführen, um auf der Grundlage der Windbedingungsdaten von der Eingabevorrichtung (24) das Verbreiten des Materials von der Arbeitsmaschine (10) zu steuern,
**dadurch gekennzeichnet, dass** das System (16) eine Orientierungssteuervorrichtung (18) umfasst, die konfiguriert ist, um eine Orientierung der Arbeitsmaschine (10) zu bestimmen, wobei die Orientierung die Kompassrichtung, in der sich die Maschine (10) bewegt, beschreibt,
und dass der Controller (22) mit der Orientierungssteuervorrichtung (18) gekoppelt und konfiguriert ist, um Programmanweisungen auszuführen, um auf der Grundlage einer Seitenwindkomponente, die in Verbindung mit der Orientierung der Arbeitsmaschine (10) bestimmt wird, und der Windbedingungsdaten das Verbreiten des Materials von der Arbeitsmaschine (10) zu steuern.

2. System (16) nach Anspruch 1, wobei die Eingabevorrichtung (24) konfiguriert ist, um die Windbedingungsdaten so, wie sie durch eine Bedienungsperson der Arbeitsmaschine (10) eingegeben werden, zu empfangen.

3. System (16) nach Anspruch 1, wobei der Controller ferner konfiguriert ist, um auf der Grundlage der Seitenwindkomponente eine erste seitliche Verbreitungsgrenze und eine zweite seitliche Verbreitungsgrenze zu steuern.

4. System (16) nach Anspruch 3, wobei die Streuvorrichtung ein erstes Laufrad (26) und ein zweites Laufrad (28) enthält, wobei das erste Laufrad (26) und das zweite Laufrad (28) jeweils Laufräder mit unabhängig gesteuerter veränderlicher Drehzahl sind, wobei die Streuvorrichtung (20) konfiguriert ist, um das Material von der Arbeitsmaschine (10) unter Verwendung des ersten Laufrads (26) und des zweiten Laufrads (28) zu verbreiten,
wobei der Controller (22) konfiguriert ist, um auf der Grundlage der Seitenwindkomponente die Drehzahl des ersten Laufrads (26) und die Drehzahl des zweiten Laufrads (28) unabhängig so zu steuern, dass die erste seitliche Verbreitungsgrenze und die zweite seitliche Verbreitungsgrenze eingehalten sind.

5. System (16) nach Anspruch 4, wobei der Controller (22) konfiguriert ist, um die Drehzahl des ersten Laufrads (26) oder des zweiten Laufrads (28) so zu erhöhen und gleichzeitig die Drehzahl das anderen des ersten Laufrads (26) und des zweiten Laufrads (28) so zu vermindern, dass die erste seitliche Verbreitungsgrenze und die zweite seitliche Verbreitungsgrenze eingehalten sind.

6. System (16) nach Anspruch 1, wobei die Orientierungssteuervorrichtung ein Globalpositionierungssystem-(GPS) -Empfänger ist.

7. Arbeitsmaschine (10), insbesondere ein Mähdrescher, die ein System (16) nach einem der vorhergehenden Ansprüche enthält.

## Revendications

1. Système (16) destiné à l'épandage par diffusion d'un matériau à partir d'un engin (10) de travail dans des conditions de vent, comportant :
un épandeur (20) configuré pour l'épandage par diffusion dudit matériau ;
un dispositif (24) d'entrée configuré pour fournir des données sur les conditions de vent, lesdites données sur les conditions de vent comprenant une direction du vent et une vitesse du vent ;
une commande (22) couplée audit épandeur et audit dispositif d'entrée, ladite commande étant configurée pour exécuter des instructions de programme afin de commander la diffusion dudit matériau à partir dudit engin (10) de travail sur la base desdites données sur les conditions de vent issues dudit dispositif (24) d'entrée,
**caractérisé en ce que** le système (16) comporte un dispositif (18) de commande d'orientation configuré pour déterminer une orientation dudit engin (10) de travail, l'orientation décrivant la direction de boussole dans laquelle avance l'engin (10),
et **en ce que** la commande (22) est couplée au dispositif (18) de commande d'orientation et configurée pour exécuter des instructions de programme afin de commander la diffusion dudit matériau à partir dudit engin (10) de travail sur la base d'une composante de vent de travers qui est déterminée en conjonction avec ladite orientation dudit engin (10) de travail et lesdites données sur les conditions de vent.

2. Système (16) selon la revendication 1, ledit dispositif (24) d'entrée étant configuré pour recevoir lesdites données sur les conditions de vent telles que saisies par un opérateur dudit engin (10) de travail.

3. Système (16) selon la revendication 1, ladite commande étant en outre configurée pour commander une première limite latérale de diffusion et une deuxième limite latérale de diffusion sur la base de ladite composante de vent de travers.

4. Système (16) selon la revendication 3, ledit épandeur comprenant un premier impulseur (26) et un deuxième impulseur (28) et chacun desdits premier impulseur (26) et deuxième impulseur (28) étant un impulseur à vitesse variable commandé indépendamment, ledit épandeur (20) étant configuré pour diffuser ledit matériau à partir dudit engin (10) de travail à l'aide dudit premier impulseur (26) et dudit deuxième impulseur (28),
ladite commande (22) étant configurée pour commander indépendamment la vitesse de rotation dudit premier impulseur (26) et la vitesse de rotation dudit deuxième impulseur (28) de façon à maintenir ladite première limite latérale de diffusion et ladite deuxième limite latérale de diffusion sur la base de ladite composante de vent de travers.

5. Système (16) selon la revendication 4, ladite commande (22) étant configurée pour augmenter la vitesse de rotation de l'un desdits premier impulseur (26) et deuxième impulseur (28) et pour diminuer simultanément la vitesse de rotation de l'autre desdits premier impulseur (26) et deuxième impulseur (28) afin de maintenir ladite première limite latérale de diffusion et ladite deuxième limite latérale de diffusion.

6. Système (16) selon la revendication 1, ledit dispositif de commande d'orientation étant un récepteur pour système de positionnement planétaire (GPS).

7. Engin (10) de travail, en particulier moissonneuse-batteuse, comportant un système (16) selon l'une quelconque des revendications précédentes.
